# EUROPEAN PATENT SPECIFICATION

(11) **EP 3 103 319 B1**
(45) Date of publication and mention of the grant of the patent: **08.01.2020**
(21) Application number: 16173877.8
(22) Date of filing: 10.06.2016
(51) Int. Cl.: A01D 41/12, F02B 29/04, F02M 35/08

(54) **COOLING PACKAGE FOR AN AGRICULTURAL VEHICLE**
KÜHLPAKET FÜR EIN LANDWIRTSCHAFTLICHES FAHRZEUG
ENSEMBLE DE REFROIDISSEMENT POUR UN VÉHICULE AGRICOLE

(30) Priority: 10.06.2015 BE 201505355
(43) Date of publication of application: 14.12.2016
(73) Proprietor: CNH Industrial Belgium nv, 8210 Zedelgem (BE)
(72) Inventor: Demonie, Lode A., 8840 Staden (BE); Heyns, Jolan, 8020 Oostkamp (BE); Titeca, Steven, 9000 Gent (BE); Duquesne, Frank R.G., 8550 Zwevegem (BE)
(74) Representative: CNH Industrial IP Department

(56) References cited:
- EP-A1- 1 950 074
- EP-A2- 1 923 551
- DE-A1-102007 040 661
- US-A- 3 786 891
- US-A1- 2008 256 915
- US-A1- 2008 257 531
- US-A1- 2008 261 507

## Description

### BACKGROUND OF THE INVENTION

The present invention relates to agricultural vehicles, and, more specifically to fluid cooling systems used with such vehicles.

An agricultural vehicle known as a "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves and performs a threshing operation on the crop to remove the grain. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris toward the rear of the combine. Non-grain crop material such as straw from the threshing section proceeds through a residue system, which may utilize a straw chopper to process the non-grain material and direct it out the rear of the combine. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

More particularly, a rotary threshing or separating system includes one or more rotors which can extend axially (front to rear) or transversely within the body of the combine, and which are partially or fully surrounded by a perforated concave. The crop material is threshed and separated by the rotation of the rotor within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through vertically arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger conveys the grain to a grain tank for temporary storage. The grain accumulates to the point where the grain tank is full and is discharged to an adjacent vehicle such as a semi-trailer, gravity box, straight truck or the like by an unloading system on the combine that is actuated to transfer grain into the vehicle.

Agricultural combines tend to become larger and more sophisticated over time. As the size of the combines increase, the power requirements also increase. More power means more heat generated onboard the combine. Onboard components such as an internal combustion (IC) engine, hydraulic circuits, an air conditioning (A/C) circuit, etc. have internal fluids that require cooling. To this end, combines typically include several discrete fluid coolers located at various convenient locations onboard the combine. For example, the radiator for the IC engine typically is positioned along a side of the combine, with a rotating screen positioned in the vertical side wall of the combine. As another example, the A/C circuit can be located in the roof of the operator cab. Such coolers are effective to cool the respective components, but take up additional room onboard the combine, and may not be located at the best location to avoid chaff, dust, etc. from plugging the screen or radiator. This chaff and dust can also become a problem for the air intake of the combustion engine. For efficient and clean operation of the combustion engine it is important that it takes in clean air.

EP 1 950 074 A1 discloses an agricultural harvester with an engine cooling system including a fan and a filter. When cooling the engine, air is drawn in through the filter and blown into the engine compartment. The fan can occasionally be reversed in order to blow dust off the filter surface. When turned into reverse mode, a door is opened at the engine side of the cooling system to let in air from outside the engine compartment.

What is needed in the art is a cooling system for an agricultural harvester that effectively cools various fluids onboard the harvester, is easy to install, and avoids chaff, dust, etc., especially in the air intake of the combustion engine.

### SUMMARY OF THE INVENTION

The present invention provides an agricultural vehicle including a cooling system with reversible fans, and a remotely operated door. The door may be opened by the operator or control logic, and the fans reversed to clean out dust, debris, etc. from the interior of the cooling system. The agricultural vehicle includes an internal combustion engine, and a fluid cooling system for cooling at least one component onboard the agricultural vehicle. The fluid cooling system is positioned in association with the internal combustion engine, and includes a housing and at least one cooling unit arranged within the housing. A door is pivotally mounted relative to the housing. An actuator is connected with the door for moving the door between a closed position against the housing and an open position allowing cleaning of an interior of the housing. An activator is coupled with the actuator, for selectively activating the actuator. A combustion air duct providing combustion air to the IC engine is fluidly connected to the cooling system, and can either provide combustion air from the interior or exterior of the cooling system

An advantage of the present invention is that air flow through the cooling system can be reversed while the door is open to clean out the interior of the cooling system.

Another advantage is that the cooling system has fans that can be reversed in coordination with an open/close position of the cooling system door, to thereby clean out the interior of the cooling system when the door is in an at least partially open position.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a side view of an embodiment of an agricultural vehicle in the form of a combine, which includes an embodiment of a cooling system of the present invention;
Fig. 2 is a side view of a portion of the internal components of the combine shown in Fig. 1, including the grain tank, IC engine and cooling system shown in Fig. 1;
Fig. 3 is a side view of the internal components shown in Fig. 2;
Fig. 4 is a side view of the cooling package shown in Figs. 2 and 3;
Fig. 5 is a partially fragmented, end view of another embodiment of a cooling package of the present invention;
Fig. 6 is a side view of the cooling package shown in Fig. 9, with the door in a partially opened position;
Fig. 7 is a further adaptation of the cooling package shown in Figs. 5 and 6, with a combustion air duct for the IC engine connected with the cooling package;
Fig. 8 is a perspective view of the combustion air duct, with the door for the cooling package in a partially open position, and with 2 baffles to control air flow through the combustion air duct; and
Fig. 9 is a side view of a portion of the combustion air duct shown in Figs. 7 and 8, with the 2 baffles in an intermediate position.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-aft direction of the agricultural harvester and are equally not to be construed as limiting.

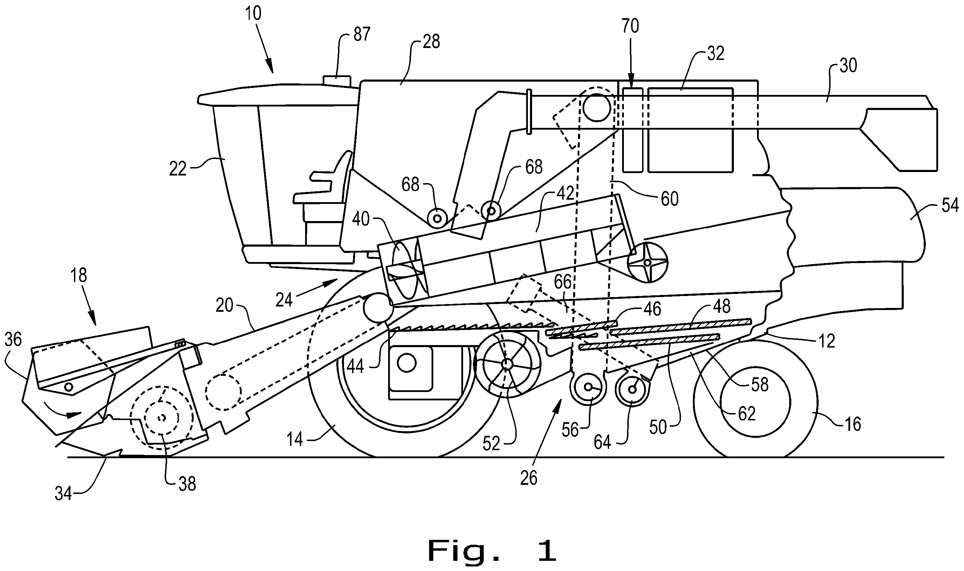

Referring now to the drawings, and more particularly to Fig. 1, there is shown an agricultural harvester in the form of a combine 10, which generally includes a chassis 12, ground engaging wheels 14 and 16, a header 18, a feeder housing 20, an operator cab 22, a threshing and separating system 24, a cleaning system 26, a grain tank 28, and an unloading conveyance 30. Unloading conveyor 30 is illustrated as an unloading auger, but can also be configured as a belt conveyor, chain elevator, etc.

Front wheels 14 are larger flotation type wheels, and rear wheels 16 are smaller steerable wheels. Motive force is selectively applied to front wheels 14 through a power plant in the form of a diesel engine 32 and a transmission (not shown). Although combine 10 is shown as including wheels, is also to be understood that combine 10 may include tracks, such as full tracks or half tracks.

Header 18 is mounted to the front of combine 10 and includes a cutter bar 34 for severing crops from a field during forward motion of combine 10. A rotatable reel 36 feeds the crop into header 18, and a double auger 38 feeds the severed crop laterally inwardly from each side toward feeder housing 20. Feeder housing 20 conveys the cut crop to threshing and separating system 24, and is selectively vertically movable using appropriate actuators, such as hydraulic cylinders (not shown).

Threshing and separating system 24 is of the axial-flow type, and generally includes a rotor 40 at least partially enclosed by and rotatable within a corresponding perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42.

Grain which has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve), a lower sieve 50 (also known as a cleaning sieve), and a cleaning fan 52. Grain on sieves 46, 48 and 50 is subjected to a cleaning action by fan 52 which provides an airflow through the sieves to remove chaff and other impurities such as dust from the grain by making this material airborne for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of lower sieve 50. Clean grain auger 56 receives clean grain from each sieve 48, 50 and from bottom pan 58 of cleaning system 26. Clean grain auger 56 conveys the clean grain laterally to a generally vertically arranged grain elevator 60 for transport to grain tank 28. Tailings from cleaning system 26 fall to a tailings auger trough 62. The tailings are transported via tailings auger 64 and return auger 66 to the upstream end of cleaning system 26 for repeated cleaning action. Cross augers 68 at the bottom of grain tank 28 convey the clean grain within grain tank 28 to unloading auger 30 for discharge from combine 10.

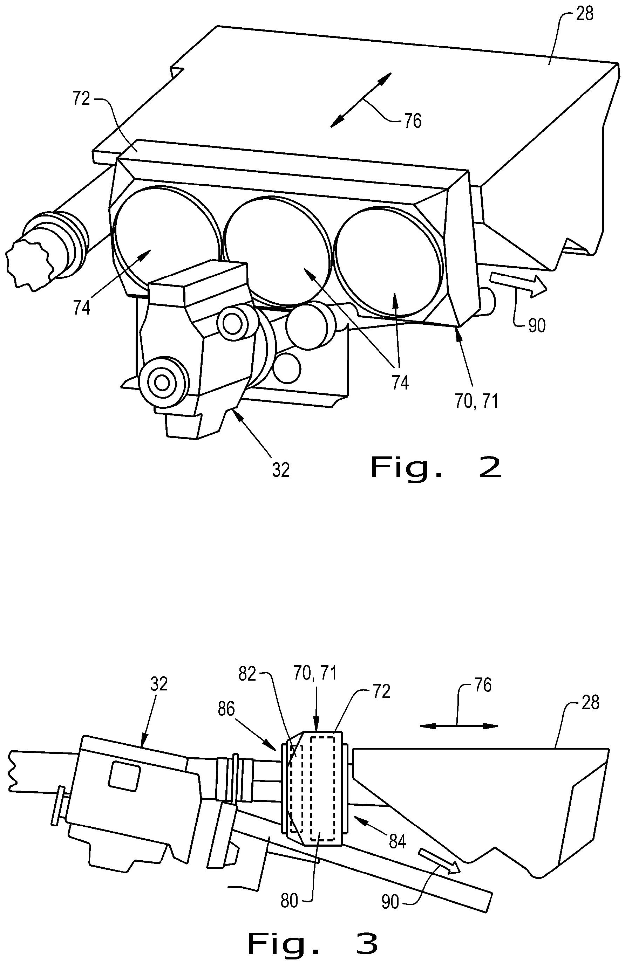

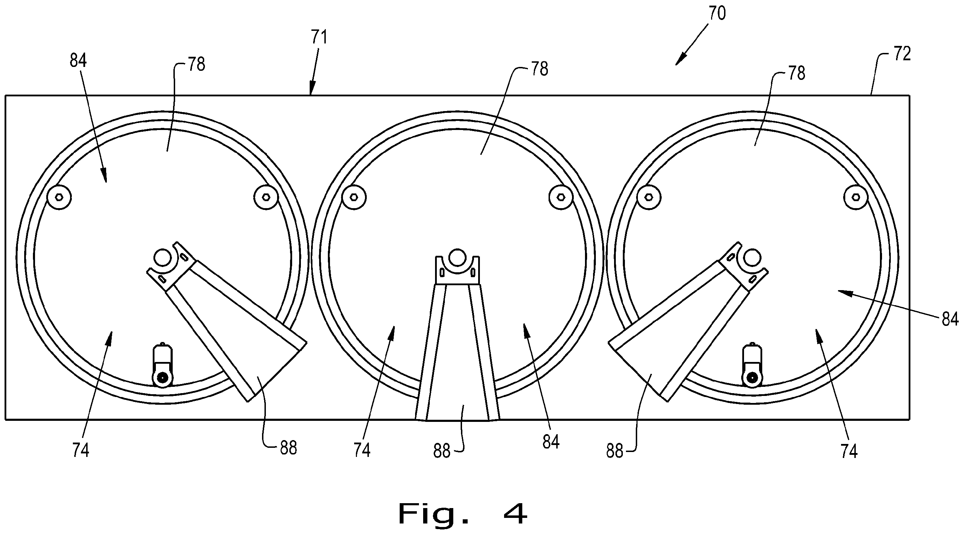

According to an aspect of the present invention, combine 10 includes a cooling system 70 for cooling at least one component onboard the combine 10 (Figs. 2-6). For example, the cooling system 70 can be used to cool the IC engine 32, exhaust and combustion gases associated with the IC engine 32, a hydraulic circuit (not shown), an air conditioning (A/C) circuit 87 associated with the operator cab 22, and/or other fluid carrying components onboard the combine 10.

The cooling system 70 is in the form of an integral cooling package 71 that is positioned between the IC engine 32 and the grain tank 28. The cooling package 71 includes a housing 72, and a plurality of cooling units 74 arranged in a side-to-side manner within the housing 72, transverse to a fore-aft direction 76 of the combine 10. Each cooling unit 74 generally includes a screen 78, a fluid cooler 80 and a fan 82. The screen 78 is at the inlet 84 of the corresponding cooling unit 74 adjacent to the grain tank 28, and the fan 82 is at the outlet 86 of the corresponding cooling unit 74 adjacent to the IC engine 32. The inlet 84 allows air to be drawn into the respective cooling unit 74, and the outlet 86 allows air to be exhausted from the respective cooling unit 74.

In the illustrated embodiment, the IC engine 32 is located rearward of the grain tank 28. Thus, the inlet 84 is located at the front surface (not numbered) of the cooling package 71 which faces toward the rear surface the grain tank 28. Conversely, the outlet 86 is located at the rear surface (not numbered) of the cooling package 71 which faces toward the front surface the IC engine 32. In the event that the IC engine 32 is located below or in front of the grain tank 28, then the inlet/front surface of the cooling package 71 can face toward the bottom or front surface, respectively, of the grain tank 28.

Each fluid cooler 80 is configured for cooling a corresponding type of fluid, such as a cooling fluid for an IC engine, hydraulic oil in a hydraulic power circuit, a refrigerant fluid used in an A/C circuit, etc. The fluid coolers can be configured with any combination of cooling circuits, and can all be the same, partially the same, or all different. In the event that one of more of the fluid coolers 80 are configured different relative to each other, then those cooling circuits are likely independent from each other. However, if multiple fluid coolers are configured the same, then those cooling circuits can be independent from each other or can be coupled together in series or parallel. In the illustrated embodiment, the three fluid coolers 80 are each assumed to be configured differently from each other and independent from each other. One fluid cooler 80 is configured as a radiator for the IC engine 32, another fluid cooler 80 is configured as an oil cooler for a hydraulic circuit, and the third fluid cooler 80 is configured as a heat exchange coil for an A/C circuit 87 associated with the operator cab 22. The fluid coolers 80 can also be configured as other types of fluid coolers, such as an intercooler or an aftercooler.

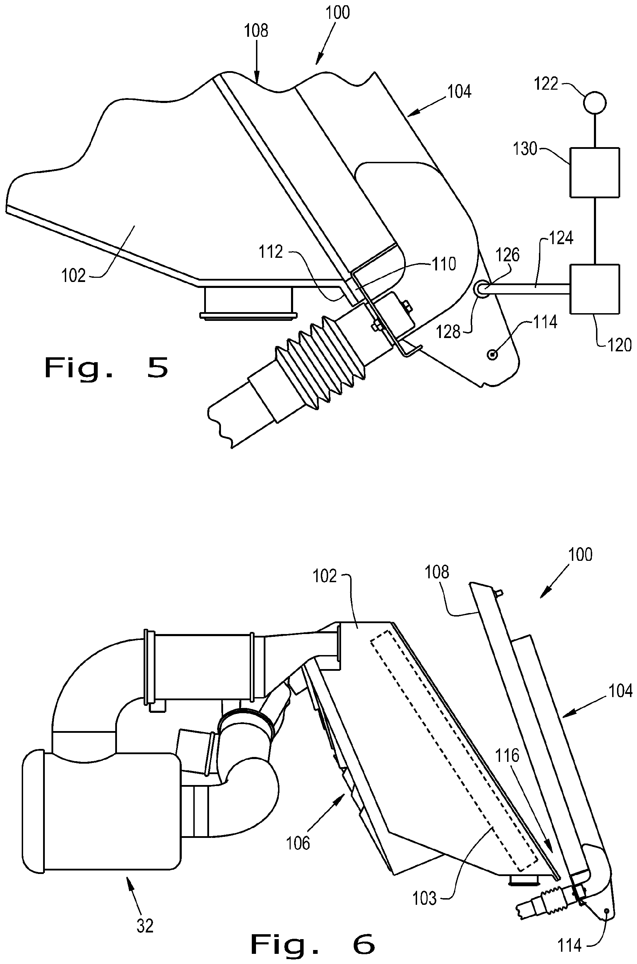

Each screen 78 functions as a coarse filter to filter out dust, chaff, etc. from entering the corresponding cooling unit 74. In the illustrated embodiment, each screen 78 is configured as a rotating screen which is positioned generally vertical (Figs. 2-4) or at an acute angle to the vertical (Figs. 5-8). Each rotating screen 78 can include a cleaner 88 which removes chaff, dirt, etc. from the screen as it rotates. Each screen 78 can also be configured to be movable toward and away from the respective cooling unit 74 for cleaning of and access to the respective cooling unit 74 (see Fig. 6). The screen 78 can be manually movable or can be movable using a suitable powered actuator, such as a pneumatic actuator or an electric motor and gear arrangement.

Each fan 82 is configured for moving air through the respective cooling unit 74 for effective liquid-to-air cooling. The rotational speed, blade pitch angle, etc. can of course vary, depending on the particular needs of the cooling unit 74. The air flow on the outlet side of the cooling unit 74 can be used for cooling and/or cleaning an area onboard the combine 10. For example, air from the outlet 86 of the cooling unit 74 configured as a radiator can be used to both cool, clean and inhibit buildup of dirt and chaff on the IC engine 32.

One or more of the fans 82 can also be configured for reversal of the air flow direction through the corresponding cooling unit 74. This can be accomplished using a reversible motor, or the blades can have a varying pitch to reverse the air flow direction. When the air is then flowing in the opposite direction, such that the inlet 84 is in fact the outlet of the cooling unit 74, then this flow of air can be used to clean the screen 78. Alternatively, the reverse flowing air can be used to clean and/or cool other parts of the combine 10. For example, referring to Figs. 2 and 3, air flowing in a reverse direction 90 can be directed under the grain tank 28 toward the outer surface of the concaves for cleaning this area within the combine 10. The screens can be moved away from the cooling unit 74, as shown in Fig. 6, to allow the air to flow at a higher flow rate and/or velocity for better cleaning. The reverse flowing air can also be used to clean a different selected area within the combine 10. To that end, suitable plenums, channels, guides, etc. (not shown) can be used to direct the air to a selected location onboard the combine 10.

Referring now to Figs. 5 and 6, there is shown another embodiment of a cooling package 100 which is similar to cooling system 70 shown and described above. Cooling package 100 generally includes a housing 102, and a plurality of cooling units 103 arranged in a side-to-side manner within the housing 102. Each cooling unit 103 generally includes a screen 104, a fluid cooler (not specifically shown) within the housing 102, and a fan 106. A door 108 carries the screens 104, and is movable between a closed position (Fig. 5) and an open position (Fig. 6). The door 108 is sealed with the housing 102, and includes a seal 110 which engages with a mating flange 112 on the housing 102 when the door 108 is in the closed position. The door 108 has a hinge axis 114 which is located such that a gap 116 exists between the door 108 and housing 102 to allow debris and other material to fall through the gap 116 for cleaning when the door 108 is in the open position.

More specifically, and referring to Fig. 5, the door 108 can be remotely moved between the open and closed positions through the use of an actuator 120 and activator 122. The actuator 120 is connected with the door 108 and is configured for moving the door 108 between a closed position against the housing 102 and an open position allowing cleaning of an interior of the housing 102. The actuator 120 can be any suitable type of actuator, such as an electrical actuator or a fluid powered actuator. In the illustrated embodiment, the actuator 120 is assumed to be a linear hydraulic actuator (e.g., hydraulic cylinder), with a hydraulic ram 124 which is connected with the door 108 at a suitable location. In the embodiment shown, the ram 124 has a hooked distal end 126 which extends through a hole 128 formed in the door 108. Other suitable types of pivotal connections are also possible.

The actuator 120 is shown as being under the control of an electrical processing circuit 130, which in turn receives an input signal from the activator 122. In the illustrated embodiment, the activator 122 is assumed to be a switch in the operator cab 22 which can be manually depressed by the operator to open the door 108. For example, the switch can be a momentary push button switch or a virtual switch on a video display. The activator 122 provides an output signal to the electrical processing circuit 130, which in turns controls the actuator 120. Alternatively, the electrical processing circuit 130 can itself act as the activator, based on some type of sensed input associated with the cooling package 100 (e.g., air flow rate indicating the cooling package 100 needs cleaned), or a time based activation, etc.

The cooling package 100 also includes one or more fans 106, with each fan 106 being associated with a respective cooling unit 103 and operable to effect air movement in a first direction (e.g., toward the IC engine) and a second direction (e.g., away from the IC engine). The activator 122 effects selective operation of at least one of the fans 106 to selectively effect the air movement in the first direction or the second direction, dependent upon whether the door 108 is in the open position or the closed position. For example, the fan direction can be reversed to blow air toward the door 108, and thereby clean the interior of the cooling package 100. The air flow reversal can be accomplished by changing the rotational direction or the blade pitch angle of the fan 106. This reversal can occur when the door 108 is at a predetermined position, such as a partially open or fully open position. In this manner, chaff or dust, etc. can be blown out from the interior of the cooling package 100.

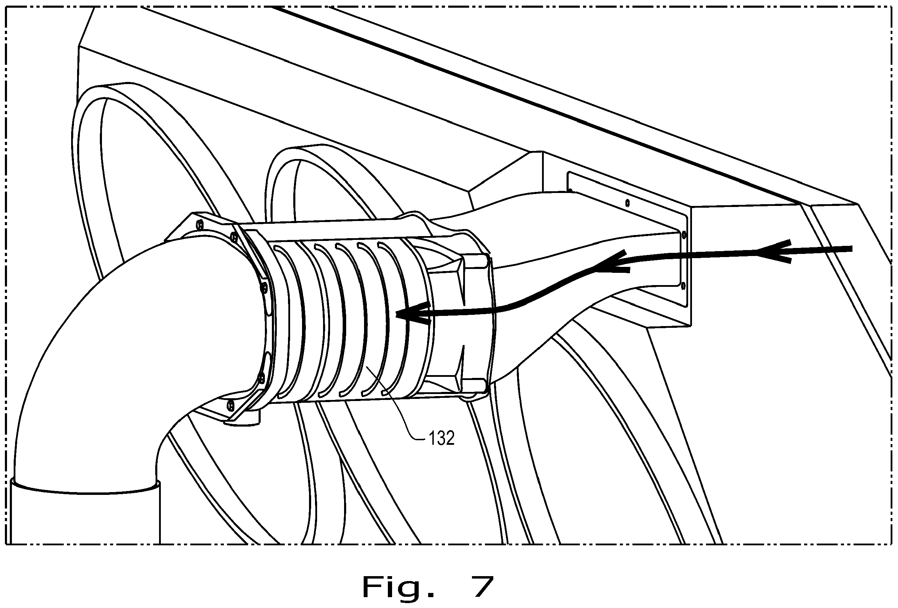

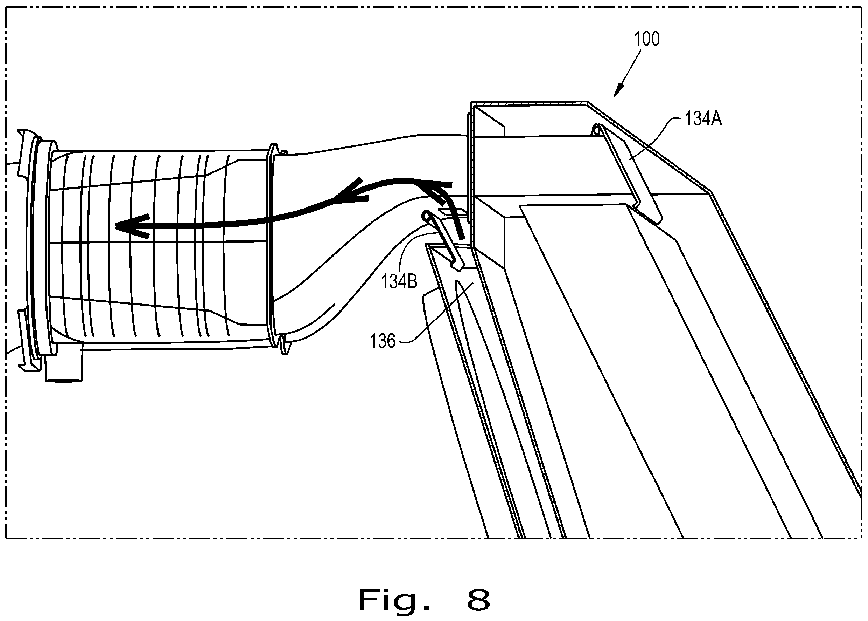

The cooling package 100 can also be connected with a combustion air duct 132 which interconnects between the interior of the cooling package 100 and the IC engine 32 (Figs. 7 and 8). The combustion air duct 132 includes at least one baffle 134 which is selectively operable to allow combustion air to enter the combustion air duct 132 either from the interior or an exterior of the cooling package 100. More specifically, referring to Figs. 7-9, the combustion air duct 132 can include a pair of baffles 134A and 134B which are each movable between an open and a closed position, wherein one of the baffles 134A allows the combustion air to enter the combustion air duct 132 from the interior of the cooling package 100 when in the open position, and the other baffle 134B allows the combustion air to enter the combustion air duct 132 from the exterior of the cooling package when in the open position. Fig. 7 shows the combustion air entering from the end of the inlet to the combustion air duct 132, adjacent to the door 108, when the baffle 134A is in the open position. Fig. 8 shows the baffle 134A closed and the baffle 134B open, with the combustion air entering from a separate duct 136 extending to the bottom and exterior of the cooling package 100.

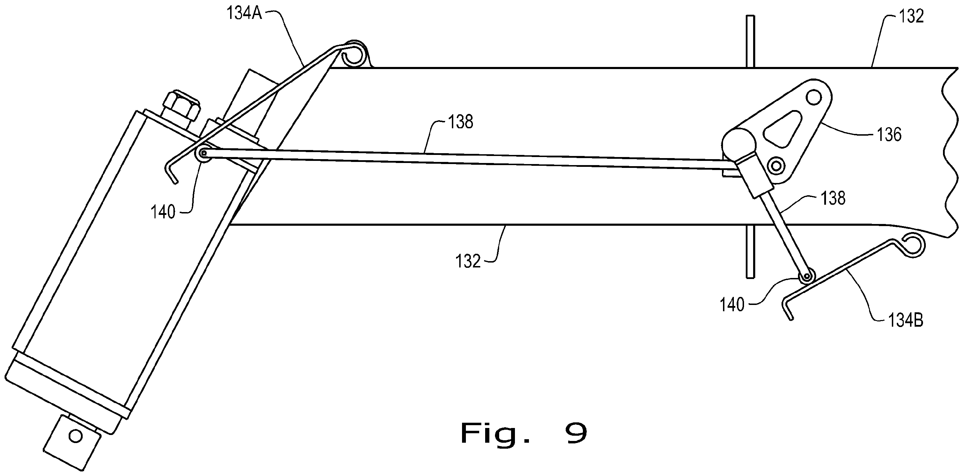

As shown in Fig. 9, the two baffles 134A and 134B can be configured to be simultaneously movable together such that when the one baffle is open the other baffle is closed, and vice versa. The two baffles 134A and 134B are each shown in a partially open position in Fig. 9.

An actuator of any suitable configuration may be connected to a lever 136, which in turn is connected to a pair of arms 138, each having a roller 140 at the distal end thereof. Each arm 138 and roller 140 is associated with a respective baffle 134A or 134B. The actuator (not specifically shown) may be any suitable type of actuator, such as an electric or pneumatic actuator. Alternatively, the baffles 134A and 134B may be passively actuated. For example, the baffles 134A and 134B can be biased to the closed or open position using a spring loaded hinge or the like, and opened and closed using pressure differences based on whether the IC engine 32 is running or idle, whether the fans 106 are operating in the forward or reverse mode, etc. Thus, both active and passive actuation of the baffles 134A and 134B are contemplated and possible, based on the specific configuration of the cooling package 100.

## Claims

1. An agricultural vehicle (10), comprising:
an internal combustion engine (32);
a fluid cooling system (70) for cooling at least one component (32, 87) onboard the agricultural vehicle (10), the fluid cooling system (70) being positioned in association with the internal combustion engine (32), and including a housing (72, 102), and at least one cooling unit (74) arranged within the housing (72, 102), the fluid cooling system (70) further including at least one fan, each said fan being associated with a respective said cooling unit and operable to effect air movement in a first direction and a second direction,
a door (108) which is pivotally mounted relative to the housing (102);
an actuator (120) connected with the door (108) for moving the door (108) between a closed position against the housing (102) and an open position allowing cleaning of an interior of the housing (102); and
an activator (122) coupled with the actuator (120), for selectively activating the actuator (120), the activator further affecting selective operation of at least one said fan to effect the air movement in the first direction or the second direction, dependent upon whether the door is in the open position or the closed position,
**characterized in that** the agricultural vehicle (10) further includes a combustion air duct fluidly interconnecting between the interior of the fluid cooling system and the internal combustion engine, the combustion air duct including at least one baffle which is selectively operable to allow combustion air to enter the combustion air duct either from the interior or an exterior of the fluid cooling system.

2. The agricultural vehicle (10) of claim 1, wherein the activator (122) comprises:
a switch (122); and/or
an electrical processing circuit (130).

3. The agricultural vehicle (10) of claim 2, wherein the activator is located within an operator cab (22) of the vehicle (10).

4. The agricultural vehicle (10) of claim 1, wherein the actuator (120) comprises:
an electrical actuator; or
a fluid powered actuator.

5. The agricultural vehicle (10) of claim 1, wherein the at least one baffle includes two baffles which are each movable between an open and a closed position, wherein one of the baffles allows the combustion air to enter the combustion air duct from the interior of the fluid cooling system when in the open position, and an other of the baffles allows the combustion air to enter the combustion air duct from the exterior of the fluid cooling system when in the open position.

6. The agricultural vehicle (10) of claim 5, wherein each of the two baffles are simultaneously movable together such that when the one baffle is open the other baffle is closed, and vice versa.

7. The agricultural vehicle (10) of claim 1, wherein the fluid cooling system includes at least one cooling unit, and each said cooling unit (74) includes a screen (78), a fluid cooler (80), and a fan (82).

8. The agricultural vehicle (10) of claim 7, wherein each said screen is carried by the door.

9. The agricultural vehicle (10) of claim 7, wherein each said screen (78) is a rotating screen which is positioned generally vertical or at an acute angle to the vertical.

10. The agricultural vehicle (10) of claim 7, wherein each said fluid cooler (80) includes one of:
a radiator for the internal combustion engine (32);
an oil cooler for a hydraulic circuit;
an intercooler;
an aftercooler; and
a heat exchange coil for an air conditioner (87) in an operator cab (22).

11. The agricultural vehicle (10) of claim 1, wherein the door (108) has a hinge axis (114) which is arranged to allow the door (108) to swing away from the housing (102), thereby creating a gap (116) for cleaning when the door (108) is in an at least a partially open position.

12. The agricultural vehicle (10) of claim 1, wherein the agricultural vehicle (10) comprises an agricultural combine.

## Patentansprüche

1. Landwirtschaftliches Fahrzeug (10) mit:
einem internen Verbrennungsmotor (32);
einem Fluidkühlsystem (70) zum Kühlen wenigstens einer Komponente (32, 87) an Bord des landwirtschaftlichen Fahrzeugs (10), wobei das Fluidkühlsystem (70) dem internen Verbrennungsmotor (32) zugeordnet ist und ein Gehäuse (72, 102) sowie wenigstens eine Kühleinheit (74), die innerhalb des Gehäuses (72, 102) angeordnet ist, umfasst, wobei das Fluidkühlsystem (70) außerdem wenigstens einen Lüfter aufweist, wobei jeder Lüfter einer entsprechenden Kühleinheit zugeordnet ist und betätigbar ist, um eine Luftbewegung in einer ersten Richtung und einer zweiten Richtung zu bewirken,
einer Tür (108), die schwenkbar bezüglich des Gehäuses (102) befestigt ist;
einem Betätigungselement (120), das mit der Tür (108) verbunden ist, zum Bewegen der Tür (108) zwischen einer geschlossenen Stellung gegen das Gehäuse (102) und einer offenen Stellung, die ein Reinigen eines Inneren des Gehäuses (102) erlaubt; und
einem Auslöseelement (122), das mit dem Betätigungselement (120) gekoppelt ist, zum selektiven Aktivieren des Betätigungselements (120), wobei das Auslöseelement außerdem einen selektiven Betrieb wenigstens eines Lüfters beeinflusst, um die Luftbewegung in die erste Richtung oder die zweite Richtung zu bewirken, abhängig davon, ob sich die Tür in der offenen Stellung oder der geschlossenen Stellung befindet,
**dadurch gekennzeichnet, dass** das landwirtschaftliche Fahrzeug (10) außerdem einen Verbrennungsluftkanal umfasst, der eine Fluidverbindung zwischen dem Inneren des Fluidkühlsystems und dem internen Verbrennungsmotor herstellt, wobei der Verbrennungsluftkanal wenigstens eine Platte aufweist, die selektiv betätigbar ist, um Verbrennungsluft entweder von dem Inneren oder einer Umgebung des Fluidkühlsystems in den Verbrennungsluftkanal eintreten zu lassen.

2. Landwirtschaftliches Fahrzeug (10) nach Anspruch 1, wobei das Auslöseelement (122) aufweist:
einen Schalter (122); und/oder
eine elektrische Verarbeitungsschaltung (130).

3. Landwirtschaftliches Fahrzeug (10) nach Anspruch 2, wobei das Auslöseelement innerhalb einer Nutzerkabine (22) des Fahrzeugs (10) angeordnet ist.

4. Landwirtschaftliches Fahrzeug (10) nach Anspruch 1, wobei das Betätigungselement (120) aufweist:
ein elektrisches Betätigungselement; oder
ein Fluid-getriebenes Betätigungselement.

5. Landwirtschaftliches Fahrzeug (10) nach Anspruch 1, wobei die wenigstens eine Platte zwei Platten umfasst, die jeweils zwischen einer offenen und einer geschlossenen Stellung bewegbar sind, wobei eine der Platten, wenn sie sich in der offenen Stellung befindet, Verbrennungsluft vom Inneren des Fluidkühlsystems in den Verbrennungsluftkanal eintreten lässt, und eine andere der Platten, wenn sie sich in der offenen Stellung befindet, Verbrennungsluft von der Umgebung des Fluidkühlsystems in den Verbrennungsluftkanal eintreten lässt.

6. Landwirtschaftliches Fahrzeug (10) nach Anspruch 5, wobei beide Platten gleichzeitig bewegbar sind, sodass, wenn die eine Platte geöffnet ist, die andere Platte geschlossen ist und umgekehrt.

7. Landwirtschaftliches Fahrzeug (10) nach Anspruch 1, wobei das Fluidkühlsystem wenigstens eine Kühleinheit umfasst, und wobei jede Kühleinheit (74) einen Filter (78), einen Fluidkühler (80) und einen Lüfter (82) aufweist.

8. Landwirtschaftliches Fahrzeug (10) nach Anspruch 7, wobei jeder Filter von der Tür getragen ist.

9. Landwirtschaftliches Fahrzeug (10) nach Anspruch 7, wobei jeder Filter (78) ein drehbarer Filter ist, der im Allgemeinen vertikal oder unter einem spitzen Winkel zur Vertikalen angeordnet ist.

10. Landwirtschaftliches Fahrzeug (10) nach Anspruch 7, wobei jeder Fluidkühler (80) wenigstens eines aus den Folgenden aufweist:
einen Radiator für den internen Verbrennungsmotor (32);
einen Ölkühler für einen Hydraulikkreis;
einen Zwischenkühler;
einen Nachkühler; und
eine Wärmetauscherspirale für eine Klimaanlage (87) in einer Nutzerkabine (22).

11. Landwirtschaftliches Fahrzeug (10) nach Anspruch 1, wobei die Tür (108) eine Gelenkachse (114) aufweist, die derart angeordnet ist, dass sie der Tür (108) ermöglicht, vom Gehäuse (102) weg zu schwenken, wodurch eine Lücke (116) zum Reinigen erzeugt wird, wenn die Tür (108) sich in einer wenigstens teilweise offenen Stellung befindet.

12. Landwirtschaftliches Fahrzeug (10) nach Anspruch 1, wobei das landwirtschaftliche Fahrzeug (10) ein Mähdrescher ist.

## Revendications

1. Véhicule agricole (10) comprenant :
un moteur à combustion interne (32) ;
un système de refroidissement par fluide (70) pour refroidir au moins un composant (32, 87) à bord de le véhicule agricole (10), le système de refroidissement par fluide (70) étant positionné en association avec le moteur à combustion interne (32), et comprenant un boîtier (72, 102) et au moins un bloc de refroidissement (74) disposé à l'intérieur du boîtier (72, 102), le système de refroidissement par liquide (74) comprenant en outre au moins un ventilateur, chaque dit ventilateur étant associé à une dite unité de refroidissement respective et pouvant effectuer un déplacement de l'air dans une première direction et dans une deuxième direction ;
une porte (108) qui est montée de manière à pouvoir pivoter par rapport au boîtier
(102) ;
un actionneur (120) lié à la porte (108) permettant de bouger la porte (108) entre une position fermée contre le boîtier (102) et une position ouverte permettant de nettoyer l'intérieur du boîtier (102) ; et
un activateur (122) couplé à l'actionneur (120), pour actionner de façon sélective l'actionneur (120), l'activateur affectant en outre le fonctionnement sélectif au moins d'un dit ventilateur pour effectuer le déplacement de l'air dans la première direction ou dans la deuxième direction, en fonction de la position ouverte ou fermée de la porte,
**caractérisé en ce que** le véhicule agricole (10) comprend en outre une conduite d'air de combustion en interconnexion fluidique entre la partie intérieure du système de refroidissement par fluide et le moteur à combustion interne, la conduite d'air de combustion comprenant au moins un déflecteur servant de manière sélective à permettre l'air de combustion de pénétrer dans la conduite d'air de combustion depuis l'intérieur ou une partie extérieure du système de refroidissement par fluide.

2. Véhicule agricole (10) selon la revendication 1, dans lequel l'activateur (122) comprend :
un commutateur (122) ; et/ou
un circuit de traitement électrique (130).

3. Véhicule agricole (10) selon la revendication 2, dans lequel l'activateur se situe dans une cabine d'opérateur (22) du véhicule (10).

4. Véhicule agricole (10) selon la revendication 1, dans lequel l'actionneur (120) comprend :
un actionneur électrique ; ou
un actionneur hydraulique.

5. Véhicule agricole (10) selon la revendication 1, dans lequel le au moins un déflecteur comprend deux déflecteurs, chacun mobile entre une position ouverte et une position fermée, dans lequel un des déflecteurs permet à l'air de combustion de pénétrer dans la conduite d'air de combustion depuis l'intérieur du système de refroidissement par fluide lorsque celui-ci est en position ouverte et un autre des déflecteurs permet à l'air de combustion de pénétrer dans la conduite d'air de combustion depuis l'extérieur du système de refroidissement par fluide lorsque celui-ci est en position ouverte.

6. Véhicule agricole (10) selon la revendication 5, dans lequel chacun des deux déflecteurs est mobile simultanément de façon à ce que quand un déflecteur est ouvert, l'autre est fermé, et inversement.

7. Véhicule agricole (10) selon la revendication 1, dans lequel le système de refroidissement par fluide comprend au moins une unité de refroidissement, et chacune des dites ou de ladite unité(s) de refroidissement (74) comprend un écran (78), un refroidisseur de fluide (80) et un ventilateur (82).

8. Véhicule agricole (10) selon la revendication 7, dans lequel ledit écran est soutenu par la porte.

9. Véhicule agricole (10) selon la revendication 7, dans lequel chaque dit écran (78) est un écran rotatif généralement positionné à la verticale ou à un angle aigu par rapport à la verticale.

10. Véhicule agricole (10) selon la revendication 7, dans lequel chaque dit refroidisseur de fluide (80) comprend :
un radiateur pour le moteur à combustion interne (32) ;
un refroidisseur d'huile pour un circuit hydraulique ;
un refroidisseur intermédiaire ;
un refroidisseur de sortie ; et
une batterie d'échangeur de chaleur pour un climatiseur (87) dans une cabine d'opérateur (22).

11. Véhicule agricole (10) selon la revendication 1, dans lequel la porte (108) dispose d'un axe charnière (114) conçu de manière à permettre à la porte (108) de basculer par rapport au boîtier (102), créant ainsi un espace (116) pour le nettoyage lorsque la porte (108) se trouve dans une position au moins partiellement ouverte.

12. Véhicule agricole (10) selon la revendication 1, dans lequel le véhicule agricole (10) comprend une moissonneuse-batteuse.
